# EUROPÄISCHE PATENTSCHRIFT

(11) **EP 3 880 452 B1**
(45) Veröffentlichungstag und Bekanntmachung des Hinweises auf die Patenterteilung: **15.05.2024**
(21) Anmeldenummer: 19794479.6
(22) Anmeldetag: 22.10.2019
(51) Int. Cl.: B29D 11/00, B05D 1/26

(54) **VERFAHREN ZUR BESCHICHTUNG VON BRILLENGLÄSERN**
METHOD FOR COATING EYEGLASS LENSES
PROCÉDÉ DE REVÊTEMENT DE VERRES DE LUNETTE

(30) Priorität: 14.11.2018 DE 102018008957
(43) Veröffentlichungstag der Anmeldung: 22.09.2021
(73) Patentinhaber: Shape Engineering GmbH, 51105 Köln (DE)
(72) Erfinder: LUDERICH, Jörg, 40882 Ratingen NRW (DE); PÖPPERL, Christian, 42697 Solingen NRW (DE); KREIS, Michael, 63584 Wetzlar Hessen (DE); TUSS, Christian, 35578 Wetzlar Hessen (DE); ALT, Herger, 35633 Lahnau Hessen (DE)
(74) Vertreter: Cohausz Hannig Borkowski Wißgott
(86) Internationale Anmeldenummer: PCT/EP2019/078742
(87) Internationale Veröffentlichungsnummer: WO 2020/099074

(56) Entgegenhaltungen:
- DE-A1- 10 050 007
- JP-A- 2009 101 354
- US-A1- 2004 096 576
- US-A1- 2010 014 048
- US-A1- 2016 306 187

## Beschreibung

Die Erfindung betrifft ein Verfahren zur Beschichtung des Randes von Brillengläsern mittels einer Nadel- oder Jet-Dosiervorrichtung, wobei das Brillenglas und die Dosiervorrichtung relativ zueinander bewegt werden und hierbei aus der Dosiervorrichtung ein Beschichtungsmaterial auf das Brillenglas, insbesondere dessen Rand aufgetragen wird, wobei die Steuerungsdaten für die Steuerung der Bewegung des Brillenglases und/oder der Dosiervorrichtung vor und/oder während des Auftragsprozesses auf Basis von geometrischen Daten der Dosiervorrichtung und gemessenen oder aus einem Datenspeicher entnommenen Geometriedaten der zu beschichtenden Fläche des Brillenglases ermittelt werden.

Ein verfahren dieser Art ist z.B. bekannt aus DE 100 50 007 A1 und JP 2009 101354 A.

Unter einer Nadeldosiervorrichtung wird dabei eine Vorrichtung verstanden, bei der aus der hohlen Nadel der Vorrichtung ein Beschichtungsmaterial im kontinuierlichen Fluß auf die zu beschichtende Oberfläche appliziert wird. Unter einer Jet-Dosiervorrichtung wird eine Vorrichtung verstanden, bei der das Beschichtungsmaterial tropfenweise aus dem Dosierkopf in Richtung zur beschichtenden Oberfläche ausgestoßen wird. Der ausgestoßene Tropfen legt dabei zwischen dem Dosierkopf und der zu beschichtenden Oberfläche eine Flugstrecke zurück.

Die Randbeschichtung von Brillengläsern mit fließfähigen Beschichtungsmaterialen, wie Sie in der Anmeldung DE 10 2018 002 384.3 (Anmeldung Funktionsoptimierte Schichten) beschrieben ist, unterliegt einer Vielzahl von Einflussgrößen, welche den Beschichtungsvorgang beeinflussen. Neben den auf das Beschichtungsmaterial wirkenden Kräften spielt die von Brillenglas zu Brillenglas sich ändernde Form und der von der Glasstärke abhängige variable Dickenverlauf des Glasrandes eine wichtige Rolle. Wie in der Erfindungsmeldung DE 10 2018 002 384.3 beschrieben, ist es sinnvoll die Beschichtung der geometrisch variablen Randfläche des Brillenglases durch die Steuerung der Menge des Beschichtungsmaterials in Abhängigkeit der Randdicke durchzuführen. Auch eine axiale Verschiebung der Beschichtungsposition in Abhängigkeit des Dickenverlaufs ist hierbei vorgesehen um eine gleichmäßige Beschichtung zu erzielen. Eine solche Steuerung der Menge des Beschichtungsmaterials und/oder der Positionierung der Dosiervorrichtung kann auch bei der nachfolgend weiter beschriebenen Erfindung vorgesehen sein.

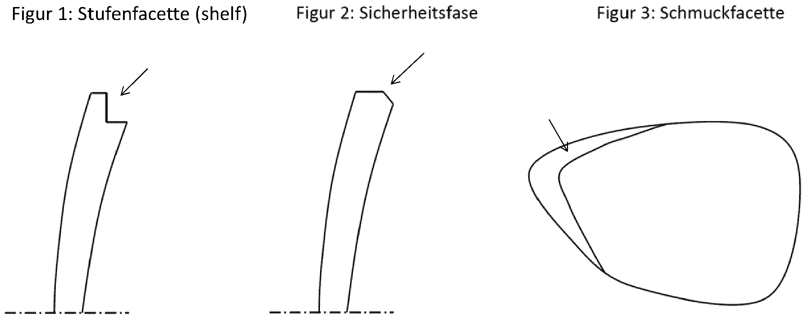

Bei dieser Vorgehensweise weitgehend unbeachtet bleiben die Zusammenhänge zwischen der Position und Orientierung, insbesondere der Winkelorientierung der Dosiervorrichtung und der Position und Orientierung, insbesondere der Winkelorientierung der zu beschichtenden Oberfläche des Brillenglasrandes, jeweils im Raum (des Erdbezugssystems) oder relativ zueinander, sowie weiterhin die Art und Anordnung der für die Beschichtung notwendigen Bewegungsachsen sowie die Steuerung der Relativlage und Relativbewegung zwischen Dosiervorrichtung und der Randoberfläche. Als Rand sollen dabei im Rahmen dieser Patentanmeldung auch Bereiche eines Brillenglases verstanden werden, die bei der Randbearbeitung des Brillenglases gefertigt werden, um Kollisionen mit der Brillenfassung zu vermeiden (z.B. "Shelf" bei Sportbrillen, Figur 1), die Verletzungsgefahr reduzieren (z.B. Sicherheitsfasen, Figur 2) oder aus ästhetischen Gründen angebracht werden (z.B. Schmuckfacette, Figur 3).

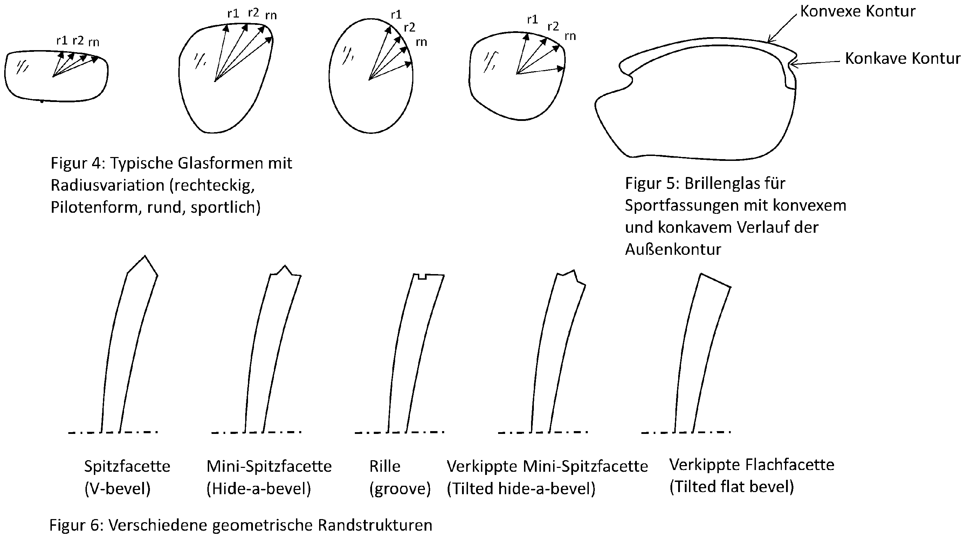

Je nach Design der Brillenfassung können Brillengläser in sehr unterschiedlichen Formen gefertigt werden. Von runden über Pilotformen bis hin zu rechteckigen Formen kann nahezu jede beliebige Geometrie auftreten, Figur 4. Die Krümmung der Randkontur variiert daher sowohl abhängig von der Umfangswinkelposition (bei Drehung des Brillenglases um die optische Achse oder parallel dazu) bei jedem einzelnen Glas, als auch von Brillenglas zu Brillenglas. Die Formen werden z.B. über Radien mit konstanter Winkelteilung beschrieben. In Abhängigkeit des Radius, ergibt sich eine spezifische Krümmung der äußeren Form, Figur 4.

Die Krümmung des Randes ist bei den meisten Glasformen konvex, kann aber auch eine konkave Geometrie besitzen, z.B. bei Brilllengläsern für Sportfassungen, Figur 5.

Weiterhin werden die Ränder von Brillengläsern geometrisch so ausgebildet, dass sie das Brillenglas sicher in der jeweiligen Fassung halten und zentrieren. Es werden daher unterschiedliche Randstrukturen gefertigt, von denen einige wichtige in Figur 6 dargestellt sind.

Die Oberfläche eines Brillenglases wird daher von mehreren Oberflächen gebildet, deren Geometrie sehr unterschiedlich ist und grundsätzlich bei jedem Glas anders ist. Beschichtungen des Brillenglasrandes werden z.B. auf dem gesamten Brillenglasrand vorgenommen oder in weiterer Bevorzugung nur auf ausgewählten Flächenbereichen, also Teilflächen des Brillenglasrandes vorgenommen. Andere Flächen, insbesondere die optisch wirksamen Flächen, sollen dagegen bevorzugt nicht oder nur in Ausnahmefällen beschichtet werden.

Bei Beschichtungsvorgängen entstehen durch diese unterschiedlichen Geometrien des Randes Probleme, die spezifisch für die vorliegende Aufgabenstellung sind.

Grundsätzlich würden qualitativ hochwertige Beschichtungsergebnisse am besten erreicht, wenn die geometrischen Verhältnisse zwischen Dosiervorrichtung und zu beschichtender Oberfläche während des Beschichtungsvorganges konstant bleiben würden. In der Praxis kann es sich aber als nicht realisierbar erweisen, eine ideale relative Lage zwischen Brillenglas und Dosiervorrichtung während des gesamten Beschichtungsprozesses konstant einzuhalten, oder diese ideale relative Lage wäre nur mit unwirtschaftlich hohem Steuerungsaufwand oder Maschinenaufwand zu realisieren. Z.B. könnte dies nur mit Maschinen erzielt werden, die eine besonders hohe Zahl von Freiheitsgraden bei der Bewegung von Brillenglas und/oder Dosiervorrichtung ermöglichen. Solche Maschinen sind hingegen kostspielig.

Von besonderer Bedeutung sind dabei Abstand und Winkel zwischen Dosiervorrichtung und zu beschichtender Oberfläche, insbesondere Randoberfläche des Brillenglases. Bei Beschichtungen mit einer Dosiernadel wird der Abstand bevorzugt kleiner als der Innendurchmesser Di der Dosiernadel gewählt, vorzugsweise Di/2. Dies ist vorteilhaft, da so eine stabile Flüssigkeitsbrücke zur zu beschichtenden Oberfläche hergestellt werden kann. Bei Jet-Dosiersystemen liegt der Abstand bevorzugt in einem Bereich von ca. 1-2mm, wobei die Geometrie des Kopfes des Jetdosiersystems aufgrund der Funktionsweise deutlich größer ausfällt als bei einer Dosiernadel. Übliche Breiten des Dosierkopfes von Jet-Dosiersystemen liegen im Bereich b= 5...20 mm und sind damit bis zu 20 x größer als der Dosierabstand.

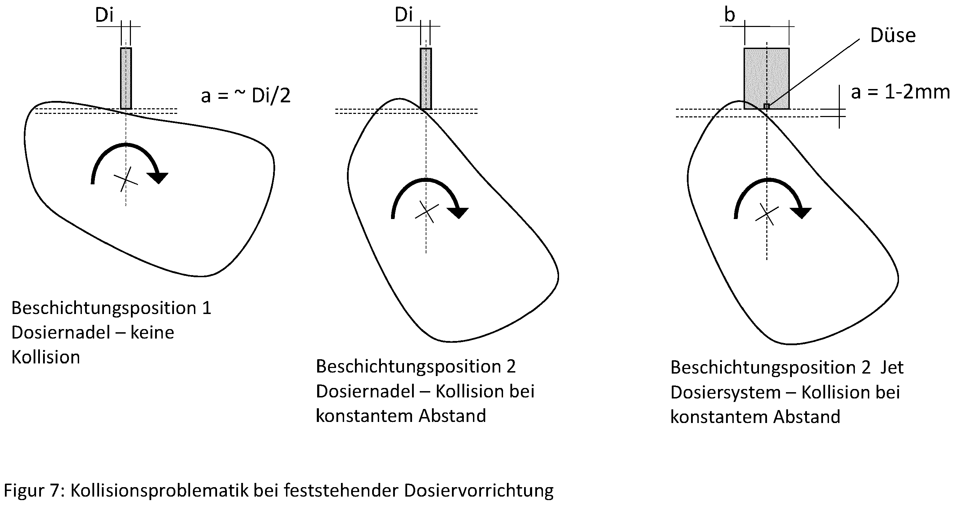

Fig.7 zeigt die daraus resultierende Problematik für feststehende Dosiervorrichtungen. Wie deutlich wird, kann es bei rotierendem Brillenglas zur Kollision zwischen Glasrand und Dosiersystem kommen. Weiterhin kann die Spaltgeometrie unterhalb einer Dosiernadel bzw. der Auftreffwinkel beim Jet-Dosieren variieren. Dadurch ändert sich das Fließverhalten bzw. die auf dem Glasrand entstehende Tropfenform.

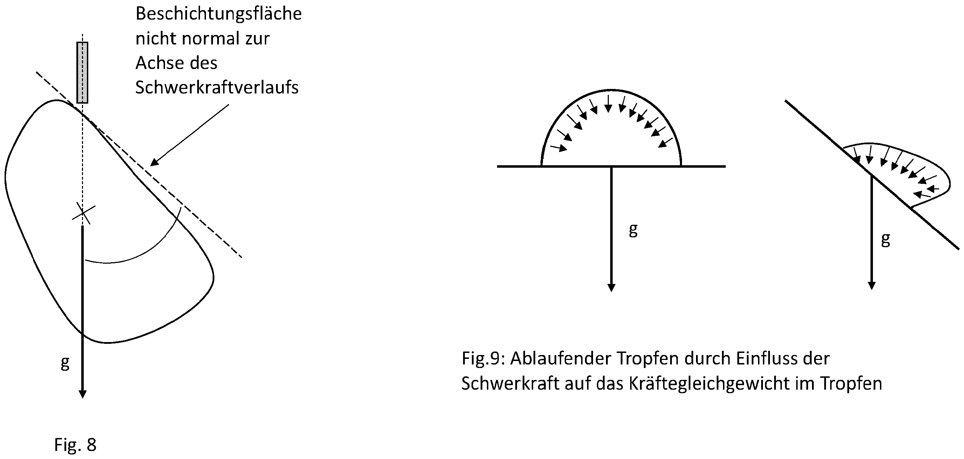

Eine weitere wichtige Problematik ist das durch die Schwerkraft bedingte Ablaufen von Beschichtungsflüssigkeit, wenn die Beschichtungsfläche nicht normal zum Achsverlauf der Schwerkraft, also nicht horizontal orientiert ist, Figur 8. In Abhängigkeit der Größe der Verkippung, der gewünschten Schichtdicke, der Viskosität und Dichte des Beschichtungsmaterials kann es hierdurch zu ungleichmäßigen Schichtdicken bis hin zum ungewünschten Ablaufen des Beschichtungsmaterials kommen. Hintergrund ist z.B. die Beeinflussung des Kräftegleichgewichts zwischen dem Beschichtungsmaterial und der Oberfläche durch den Einfluss der wirkenden Schwerkraft unter Berücksichtigung der Verkippung der Beschichtungsfläche, Figur 9.

Es ist daher eine Aufgabe der Erfindung ein Verfahren zur Beschichtung eines Brillenglases, insbesondere des Randes eines Brillenglases bereitzustellen, mit dem auf wirtschaftlich vertretbare, insbesondere günstige Weise eine Beschichtung unter Vermeidung der geschilderten Probleme erzielt werden kann.

Erfindungsgemäß wird diese Aufgabe durch ein Verfahren der eingangs genannten Art gelöst, bei dem die Steuerungsdaten für die Steuerung der Bewegung des Brillenglases und/oder der Dosiervorrichtung vor und/oder während des Auftragsprozesses auf Basis von geometrischen Daten der Dosiervorrichtung und gemessenen oder aus einem Datenspeicher entnommenen Geometriedaten der zu beschichtenden Randfläche des Brillenglases ermittelt werden, wobei die Dosierachse der Dosiervorrichtung in einem Winkelbereich von kleiner gleich +/- 45° um die Schwerkraftrichtung, vorzugsweise im Winkelbereich von kleiner gleich +-30° um die Schwerkraftrichtung konstant fest ausgerichtet ist oder mit den Steuerungsdaten gehalten wird. Z.B. können solche Daten in der Steuerung hinterlegt sein.

Bevorzugt sieht es die Erfindung vor, das alle zum Beschichtungsprozess nötigen Steuerungsdaten für die Bewegung des Brillenglases und/oder der Dosiervorrichtung vor der Durchführung der Beschichtung fertig ermittelt sind, insbesondere diese Daten aus der Steuerung zur Ansteuerung der Bewegungsaktoren von Brillenglas und/oder Dosiervorrichtung abgerufen und die Bewegungsaktoren entsprechend dieser vorbestimmten Steuerungsdaten angesteuert werden. In diesem Fall sind bevorzugt die Bewegungsbahnen von Brillenglas und/oder Dosiervorrichtung vor der Beschichtung vollständig bestimmt.

Die Ermittlung der Steuerungsdaten erfolgt bevorzugt dabei so, dass während des gesamten Beschichtungsprozesses eine vorbestimmte/vorgegebene relative Lage, bevorzugt eine ideale relative Lage zwischen Brillenglas und Dosiervorrichtung eingehalten wird. So wird idealerweise erzielt, dass diese relative Lage während des gesamten Prozesses der Beschichtung vorliegt.

Bei der Ermittlung der Steuerungsdaten unter der Vorgabe der Einhaltung einer vorbestimmten relativen Lage, insbesondere einer gewünschten idealen relativen Lage, kann sich ergeben, dass diese vorbestimmte relative Lage nicht für den gesamten Beschichtungsprozess, z.B. nicht an jeder Umfangswinkelposition bei einer Brillenglasdrehung, eingehalten werden kann, oder anders ausgedrückt kann sich ergeben, dass unter der genannten Vorgabe die Steuerungsdaten nicht vollständig für den gesamten Beschichtungsprozess ermittelt werden können. Dies kann z.B. auftreten, wenn sich bei der Ermittlung der Steuerungsdaten zeigt, dass es an wenigstens einer Stelle der Bewegungsbahn von Brillenglas und/oder Dosiervorrichtung zu einer Kollision kommen würde oder eine sonstige vorgegebene Prozeßbedingung nicht eingehalten wird.

Die Erfindung kann es vorsehen, dass in einem solchen Fall zur Änderung der vorbestimmten /vorgegebenen relativen Lage aufgefordert wird oder eine Änderung der vorbestimmten/vorgegebenen Lage automatisch durch das Steuerungssystem vorgenommen wird. Die Änderung kann z.B. so erfolgen, dass sich eine neue vorgegebene / vorbestimmte relative Lage ergibt, die von der vorherigen, insbesondere einer idealen abweicht, z.B. durch eine Differenz. Hiernach wird erneut die Ermittlung der Steuerungsdaten vorgenommen.

Der Prozess einer Änderung der vorgegebenen / vorbestimmten relativen Lage kann mehrfach, z.B. iterativ erfolgen, bis dass die Steuerungsdaten für den gesamten Beschichtungsprozeß, z.B. für alle Umfangswinkelpositionen bei Brillenglasdrehung, ermittelt werden können.

In diesem Fall konvergiert somit die Ermittlung der Steuerungsdaten auf eine vorgegebene relative Lage, die von der ursprünglichen, z.B. einer als ideal angenommen Lagen abweichend ist. Dies ist dennoch vorteilhaft, weil in dieser Ausführung während des gesamten Beschichtungsprozesses diese vorbestimmte relative Lage erhalten bleibt, selbst wenn diese nicht der idealen Lage entspricht.

Während der Iteration kann es auch vorgesehen sein, die Differenz, mit welcher eine neue vorgegebene relative Lage ausgehend von einer vorherigen relativen Lage gebildet wird, geändert wird, z.B. reduziert wird.

Die Erfindung kann auch vorsehen nur für solchen Posititionen der Bewegungsbahn, in welchen die vorgegebene relative Lage nicht eingehalten werden kann, diese vorgegebene relative Lage zu ändern, insbesondere solange, ggfs. ebenso iterativ, bis an der entsprechenden Position zumindest die (ggfs. mehrfach) geänderte vorgegebene relative Lage eingehalten wird. So kann realisiert werden, dass der Beschichtungsprozess mit den ermittelten Steuerungsdaten vollständig ausgeführt werden kann, wobei es Positionen der Bewegungsbahn von Brillenglas und/oder Dosiervorrichtung gibt, an denen die relative Lage gemäß der ursprünglichen Vorgabe, insbesondere ideal eingehalten ist und solche Positionen an denen die relative Lage davon abweichend eingehalten ist.

Die Erfindung kann auch vorsehen die Steuerungsdaten zunächst soweit vorauszuberechnen, wie sie die vorgegebene relative Lage einhalten und an solchen Positionen der Bewegungsbahn von Brillenglas und/oder Dosiervorrichtung, an denen diese vorgegebene relative Lage nicht in der Vorausberechnung erreicht wird, die Steuerungsdaten während der Beschichtungsdurchführung so zu regeln, dass die relative Lage zumindest innerhalb vorgegebener Grenzen während der Beschichtungsdurchführung eingehalten ist. Dafür kann es die Erfindung vorsehen, die relative Lage während der Beschichtung messtechnisch zu erfassen.

Bei allen Ausführungen kann es die Erfindung vorsehen, dass mit den vor und/oder während der Beschichtung ermittelten Steuerungsdaten während der Bewegung des Brillenglases und/oder der Dosiervorrichtung die relative Lage zwischen der zu beschichtenden Brillenglasoberfläche und der Dosiervorrichtung innerhalb vorgegebener Grenzen eingehalten wird.

Die vorgegebenen Grenzen können z.B. durch einen Winkelbereich gegeben sein, innerhalb von dem die relative Lage eingehalten wird.

In einer möglichen Ausführung kann es die Erfindung vorsehen, dass das Brillenglas rotiert wird und in Abhängigkeit der Rotationswinkelposition können aus den hinterlegten geometrischen Daten die Steuerungsdaten ermittelt werden, die benötigt werden um die Dosiervorrichtung so zu bewegen, dass die vorbestimmte / vorgegebene relative Lage zwischen der zu beschichtenden Oberfläche und der Dosiervorrichtung an allen Beschichtungspositionen erzielt wird.

Auch kann beispielsweise bei feststehender Dosiervorrichtung, insbesondere bei einer Ausrichtung der Dosierachse in Schwerkraftrichtung, das Brillenglas rotiert werden und in Abhängigkeit der Rotationswinkelposition können aus den hinterlegten geometrischen Daten die Steuerungsdaten ermittelt werden, die benötigt werden um die Ausrichtung der Rotationsachse und/oder den Abstand der Oberfläche zur Dosiervorrichtung so zu ändern, dass die vorgegebene/vorbestimmte relative Lage zwischen der zu beschichtenden Oberfläche und der Dosiervorrichtung an allen Beschichtungspositionen erzielt wird.

Bei einer bevorzugten Drehung des Brillenglases während des Beschichtungsprozesses kann die Erfindung vorsehen, die Drehung um die optische Achse des Brillenglases vorzunehmen oder um eine Drehachse, die zur optischen Achse des Brillenglases parallel ist.

Um die vorgegebene relative Lage einzuhalten, insbesondere diese, ggfs. iterativ, zu ändern kann z.B. die Lage der Drehachse, bevorzugt die relativ zum Brillenglas fest ist, im Raum geändert werden, z.B. durch Winkeländerung und/oder durch Translation der Drehachse. Hierfür kann wenigstens ein Maschinenfreiheitsgrad vorgesehen sein, bei derjenigen Maschine, mit der die Beschichtung durchgeführt wird.

Statt der hier konkret genannten Bewegungsmöglichkeiten können auch andere Bewegungen von Brillenglas und/oder Dosiervorrichtung vorgenommen werden.

In Abhängigkeit von der verwendeten Dosiervorrichtung werden bevorzugt wenigstens die folgenden geometrischen Daten für die Ermittlung der Steuerungsdaten herangezogen, z.B. in der Steuerung abgespeichert oder zur Bewegungssteuerung eingegeben.

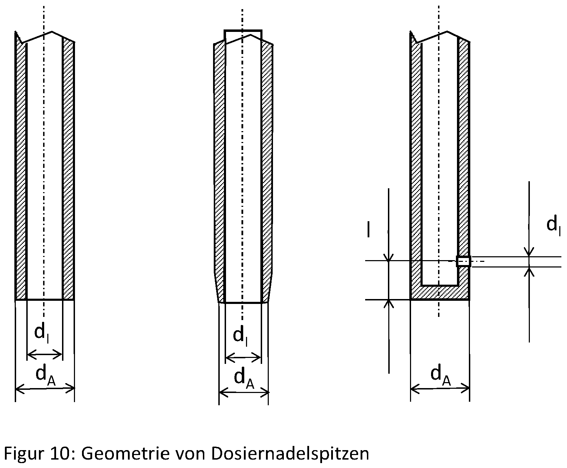

Bei Dosiernadeln kann z.B. die direkte oder indirekte Beschreibung der für den Auftragsprozess relevanten Geometrie der Nadelspitze, insbesondere auch die Position und Lage der Dosiernadelspitze relativ zum Maschinenkoordinatensystem berücksichtigt werden. In Figur 10 sind beispielhaft drei mögliche Ausführungsformen von Dosiernadeln dargestellt.

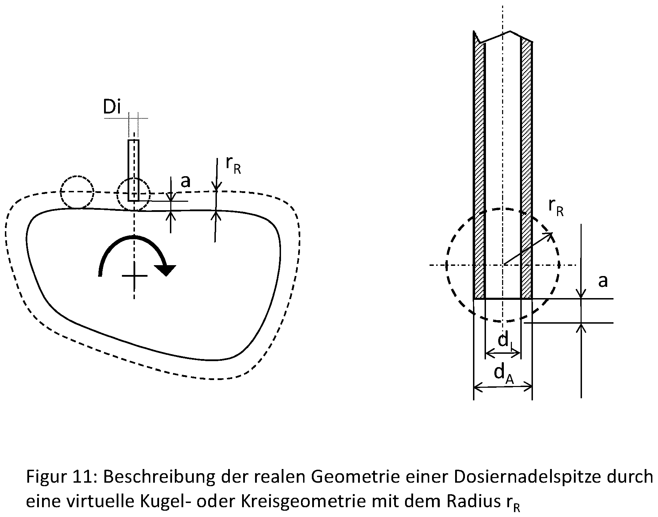

Beispielsweise können die für den Auftragsprozess relevante Position und Lage des Materialaustritts abgespeichert werden, insbesondere auch die für eine Kollision mit dem Glasrand relevanten Geometrieparameter, bevorzugt also die Außendurchmesser dA der Nadeln. Entsprechende Daten können auch indirekt in die Steuerung eingegeben werden, indem die Geometrie der realen Dosiernadel durch eine geeignete virtuelle Geometrie, z.B. eine Kugel- oder Kreisgeometrie mit dem Radius r_{R} beschrieben wird, Figur 11.

Analog werden im Fall von Jet-Dosiersysteme z.B. die Lage und Position der Düsen, insbesondere auch die für eine Kollision mit dem Glasrand relevanten Geometrieparameter, beispielhaft die Breite b, des Dosierkopfes in der Steuerung hinterlegt. Entsprechende Daten können auch indirekt in die Steuerung eingegeben werden, indem die reale Geometrie durch eine geeignete virtuelle Geometrie, z.B. eine Kugel- oder Kreisgeometrie mit dem Radius r_{R} beschrieben wird.

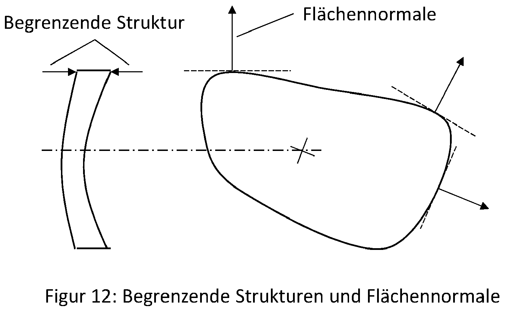

Die Geometrie der zu beschichtenden Flächen wird vorzugsweise durch die Angabe der begrenzenden Strukturen, insbesondere die in der Richtung der optischen Achse des Brillenglases beabstandeten vorderen und hinteren Kanten des Brillenglasrandes, und/oder durch die Flächennormale an jeder Auftragsposition beschrieben. Die vektorielle Lage der Flächennormalen ändert sich dabei in Abhängigkeit von der betrachteten Position innerhalb der Fläche, Figur 12. Es kann somit für ein Brillenglas vorgesehen sein, eine Vielzahl von Daten für die Flächennormalen an jeder Auftragsposition zu speichern.

Die Steuerung der Bewegung vom Brillenglas relativ zur Dosiervorrichtung und/oder von der Dosiervorrichtung relativ zum Brillenglas erfolgt in weiter bevorzugter Weise so, dass mit den ermittelten Steuerungsdaten als vorgegebene relative Lage die Dosierachse der Dosiervorrichtung in einem Winkelbereich von kleiner gleich +- 45° um die Flächennormale der zu beschichtenden Oberfläche, vorzugsweise kleiner gleich +-15° um die Flächennormale der zu beschichtenden Oberfläche gehalten wird.

Die Einhaltung der relativen Lage zwischen Dosiervorrichtung der zu beschichtenden Fläche in diesen Grenzen erweist sich für die Beschichtung als ausreichend.

Bei der zuvor genannten Änderung der relativen Lage, insbesondere innerhalb einer Iteration, kann es die Erfindung vorsehen, die relative Lage innerhalb dieser Grenzen automatisch zu ändern.

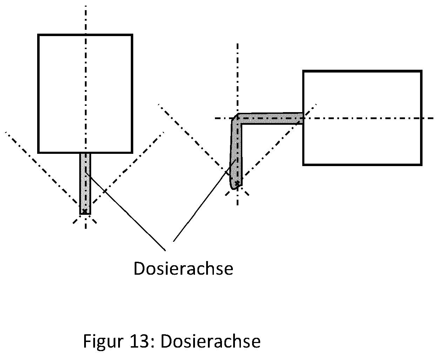

Als Achse einer Dosiervorrichtung soll dabei die Achse der Dosiernadel kurz vor dem Austritt der Beschichtungsflüssigkeit verstanden werden. Bei einer gebogenen Dosiernadel definiert also das letzte Stück der Nadel die Dosierachse, Figur 13. Insbesondere liegt die Achse in der Richtung, in welcher das Beschichtungsmaterial ungestört aus der Dosiernadel austritt. Die Dosierachse einer Dosiernadel befindet sich daher erfindungsgemäß in einem Kegel mit einem Öffnungswinkel von maximal +/- 45° relativ zur Flächennormalen.

Bei einem Jet-Dosierer wird die Dosierachse durch die Flugrichtung der ausgestoßenen Tropfen definiert. Gemäß der obenstehenden Beschreibung befindet sich auch in diesem Fall die Dosierachse in einem Kegel mit einem Öffnungswinkel von +/- 45°, vorzugsweise kleiner +- 15° relativ zur Flächennormalen.

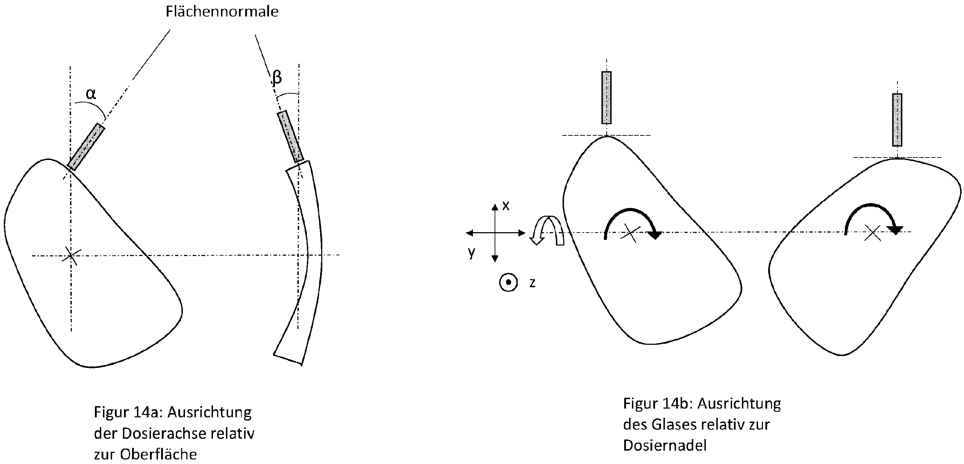

Je nach Lage der zu beschichtenden Fläche kann die benötigte Relativlage zwischen Oberfläche und Dosierachse zur Einhaltung des obigen erfindungsgemäßen Winkelbereiches z.B. durch Bewegungen in bis zu 2 Drehachsen (Winkel α und β) realisiert werden, Figur 14a. Alternativ kann die Relativbewegung durch eine Kombination von 3 translatorischen und 2 rotatorischen Bewegungen realisiert werden.

Insbesondere kann bei allen möglichen Ausführungen zur Steuerung der Bewegung das Brillenglas und/oder die Dosierachse translatorisch und/oder rotatorisch bewegt werden, Figur 14b.

Erfindungsgemäß ist es vorgesehen, die Achse der Dosiervorrichtung in einem Winkelbereich von +/- 45° zur durch den Verlauf der Gravitationskraft definierten Achse (insbesondere also der Vertikalen), vorzugsweise im Winkelbereich von +-30° auszurichten. Hierdurch wirkt die Schwerkraft in vorteilhafter Weise auf die austretende Flüssigkeit. Die Dosierachse kann dabei feststehend im Raum oder beweglich angeordnet werden, insbesondere also mit den Steuerungsdaten innerhalb dieses Winkelbereiches gehalten werden. Durch diese Anordnung wird sichergestellt, dass die Gravitationskraft im Wesentlichen, insbesondere überwiegend, in Auftragsrichtung wirkt und keine signifikante Quer- oder Gegenkraft auf den Flüssigkeitsstrang oder den Flüssigkeitstropfen durch sie erzeugt wird.

Bei der Verwendung von Dosiernadeln ist die Ausbildung einer stabilen Flüssigkeitsbrücke zwischen Dosiernadel und Oberfläche sehr wichtig für die Qualität der Beschichtung. Reißt die Flüssigkeitsbrücke oder verändert sie ihre Geometrie deutlich während des Auftragsprozesses, so sind Fehlstellen oder Ungleichmäßigkeiten in der Beschichtung zu erwarten. Diese Thematik tritt insbesondere auf, wenn die Winkellage zwischen Oberfläche und Dosierachse während der Dosierung nicht konstant gehalten wird oder die Nachführung der Winkellage nicht stufenlos, sondern nur in bestimmten Schritten erfolgt.

Um trotz einer sich ändernden Winkellage zwischen Dosierachse und Oberfläche eine stabile Flüssigkeitsbrücke zu erreichen, kann es die Erfindung bevorzugt vorsehen, dass die Geometrie der Dosiernadel durch eine Kreis- oder Kugelgeometrie mit dem Radius r_{R} angenähert bzw. also solche angenommen wird, deren Mittelpunkt zumindest näherungsweise, bevorzugt genau auf der Dosierachse liegt, Figur 11. Die Bewegungen während des Beschichtungsprozesses werden dann so gesteuert, dass die Randoberfläche des Brillenglasrandes stets diese Kreis- bzw. Kugelgeometrie berührt, insbesondere also tangential am Kreis bzw. der Kugel anliegt. Bevorzugt wird die Kreis- oder Kugelgeometrie so auf der Dosierachse virtuell positioniert, dass in dem Fall, dass die Dosierachse normal/senkrecht zur Randoberfläche steht, zwischen Dosiernadel und Oberfläche der Abstand a in Abhängigkeit vom Innendurchmesser di der Dosiernadel im Bereich 0,25 x di bis 1,25 x di, vorzugsweise im Bereich 0,4 x di bis 0,6 x di gewählt wird.

Um weiter bevorzugt in dem für die Beschichtung von Brillenglasrändern relevanten Winkelbereich, zwischen Dosierachse und Oberfläche eine stabile und ausreichend konstante Flüssigkeitsbrücke entstehen zu lassen, wird der Radius r_{R} dabei so gewählt, dass er zwischen den Größen r1 und r2 liegt. Dabei werden die Radien r1 und r2 wie folgt ermittelt:
r1 ≥ %*di vorzugsweise ≥ 5/4* di
   und
r2 ≤ 1,5* (2*di^2+2*da*di+da^2)/(4*di) vorzugsweise ≤ (2*di^2+2*da*di+da^2)/(4*di)

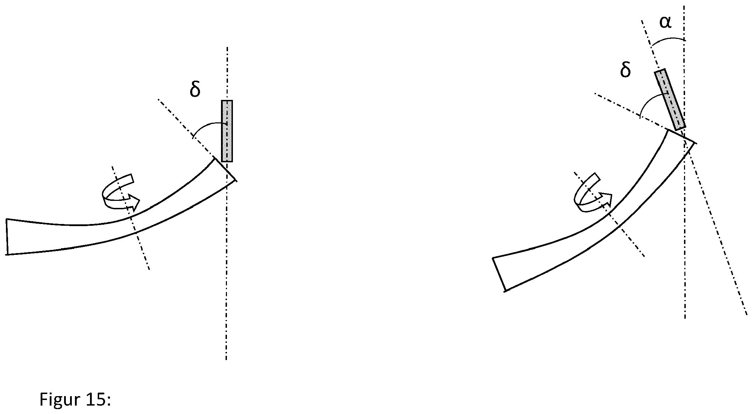

Zur weiteren Erhöhung der Stabilität der Flüssigkeitsbrücke bei sich ändernden Winkellagen zwischen Dosierachse und Randoberfläche wird in einer weiteren Ausführungsform der Erfindung vorgeschlagen, relativ zu der im Winkelbereich von +/- 45° zur durch den Verlauf der Gravitationskraft definierten Achse feststehend positionierten Achse des Dosiersystems das Brillenglas so zu positionieren, dass der Winkel δ zwischen zu beschichtender Oberfläche und Achse des Dosiersystems im Bereich von 15 bis 60°, vorzugsweise im Bereich von 30 bis 45° liegt, Figur 15. Diese Ausführung kann alternativ zur vorbenannten Ausführung vorgenommen werden, gemäß der ein Winkelbereich um die Flächennormale eingehalten wird.

Diese Ausführung der Erfindung ist insbesondere für Nadeldosiersysteme vorgesehen und reduziert die Kollisionsgefahr (Nadel/Brillenglas) bei weitgehend konstanten Bedingungen für die Flüssigkeitsbrücke zwischen Oberfläche und Dosiernadel.

## Patentansprüche

1. Verfahren zur Beschichtung des Randes von Brillengläsern mittels einer Nadel- oder Jet-Dosiervorrichtung, wobei das Brillenglas und die Dosiervorrichtung relativ zueinander bewegt werden und hierbei aus der Dosiervorrichtung ein Beschichtungsmaterial auf den Rand des Brillenglases aufgetragen wird, wobei die Steuerungsdaten für die Steuerung der Bewegung des Brillenglases und/oder der Dosiervorrichtung vor und/oder während des Auftragsprozesses auf Basis von geometrischen Daten der Dosiervorrichtung und gemessenen oder aus einem Datenspeicher entnommenen Geometriedaten der zu beschichtenden Randfläche des Brillenglases ermittelt werden, **dadurch gekennzeichnet, dass** die Dosierachse der Dosiervorrichtung in einem Winkelbereich von kleiner gleich +/- 45° um die Schwerkraftrichtung, vorzugsweise im Winkelbereich von kleiner gleich +-30° um die Schwerkraftrichtung konstant fest ausgerichtet ist oder mit den Steuerungsdaten gehalten wird.

2. Verfahren nach Anspruch 1, **dadurch gekennzeichnet, dass** die Steuerungsdaten unter der Vorgabe einer einzuhaltenden relativen Lage zwischen Brillenglas und Dosiervorrichtung ermittelt werden, insbesondere mehrfach, bevorzugt iterativ, unter Änderung der einzuhaltenden relativen Lage, bevorzugt bis dass für den gesamten Beschichtungsprozess Steuerungsdaten vorliegen, mit denen die vorgegebene relative Lage eingehalten wird.

3. Verfahren nach einem der vorherigen Ansprüche, **dadurch gekennzeichnet, dass** während der Bewegung des Brillenglases und/oder der Dosiervorrichtung, insbesondere mit den ermittelten Steuerungsdaten, die relative Lage zwischen der zu beschichtenden Brillenglasoberfläche und der Dosiervorrichtung innerhalb vorgegebener Grenzen eingehalten wird.

4. Verfahren nach einem der vorherigen Ansprüche, **dadurch gekennzeichnet, dass** bei Verwendung von Dosiernadeln eine direkte oder indirekte Beschreibung der für den Auftragsprozess relevanten Geometrie der Nadelspitze, insbesondere auch die Position und Lage der Dosiernadelspitze relativ zum Maschinenkoordinatensystem, zur Ermittlung verwendet werden.

5. Verfahren nach einem der vorherigen Ansprüche 1 bis 3, **dadurch gekennzeichnet, dass** bei Verwendung von Jet-Dosierern eine direkte oder indirekte Beschreibung der für den Auftragsprozess relevanten Geometrie des Jet-Dosierers, der Flugrichtung der Tropfen, insbesondere auch die Position und Lage der Dosierdüsen relativ zum Maschinenkoordinatensystem, zur Ermittlung verwendet werden.

6. Verfahren nach einem der vorherigen Ansprüche, **dadurch gekennzeichnet, dass** die Geometrie der zu beschichtenden Fläche, insbesondere an jeder zu beschichtenden Position der Fläche, durch die Angabe der Flächennormale beschrieben wird.

7. Verfahren nach einem der vorherigen Ansprüche, **dadurch gekennzeichnet, dass** mit den ermittelten Steuerungsdaten als relative Lage die Dosierachse der Dosiervorrichtung in einem Winkelbereich von kleiner gleich +- 45° um die Flächennormale der zu beschichtenden Oberfläche, vorzugsweise kleiner gleich +-15° um die Flächennormale der zu beschichtenden Oberfläche gehalten wird.

8. Verfahren nach einem der vorherigen Ansprüche, **dadurch gekennzeichnet, dass** mit den Steuerungsdaten der Abstand (a) zwischen Dosiernadel und der zu beschichtenden Oberfläche im Bereich 0,25 x di bis 1,25 x di, vorzugsweise im Bereich 0,4 x di bis 0,6 x di gehalten wird, wobei di der Innendurchmesser der Dosiernadel ist.

9. Verfahren nach einem der vorherigen Ansprüche, **dadurch gekennzeichnet, dass** die Geometrie der Dosiernadel durch eine Kreis- oder Kugelgeometrie mit dem Radius r_{R} angenähert wird, deren Mittelpunkt zumindest näherungsweise, bevorzugt genau auf der Dosierachse liegt und die Bewegungen während des Beschichtungsprozesses so gesteuert werden, dass die Randoberfläche des Brillenglasrandes stets diese Kreis- bzw. Kugelgeometrie berührt, insbesondere tangential am Kreis bzw. der Kugel anliegt, wobei der Radius r_{R} dabei so gewählt wird, dass er zwischen den Größen r1 und r2 liegt, wobei r1 und r2 wie folgt berechnet werden:
r1>_3/4*di, vorzugsweise r1 ≥ 5/4* di
r2≤1,5* (2*di^2+2*da*di+da^2)/(4*di), vorzugsweise
r2 ≤ (2*di^2+2*da*di+da^2)/(4*di)
wobei wobei di der Innendurchmesser und da der Außendurchmesser der Dosiernadel ist.

10. Verfahren nach einem der vorherigen Ansprüche, **dadurch gekennzeichnet, dass** die Dosierachse in einem Winkelbereich von +-45° relativ zum Achsverlauf der Schwerkraft feststehend positioniert wird und der Winkel (δ) zwischen zu beschichtender Oberfläche und Achse des Dosiersystems im Bereich von 15 bis 60°, vorzugsweise im Bereich von 30 bis 45° liegt.

## Claims

1. Method for coating the edge of eyeglass lenses by means of a needle- or jet-type metering device, wherein the eyeglass lens and the metering device are moved relative to one another and in the process a coating material is deposited on the edge of the eyeglass lens from the metering device, wherein the control data for control of the movement of the eyeglass lens and/or of the metering device before and/or during the deposition process are ascertained on the basis of geometric data of the metering device and geometry data of the edge face to be coated of the eyeglass lens which are retrieved from a data storage means or measured, **characterized in that** the metering axis of the metering device is constantly fixedly aligned, or is kept by means of the control data, in an angular range of less than or equal to +/- 45° about the direction of gravitational force, preferably in an angular range of less than or equal to +- 30° about the direction of gravitational force.

2. Method according to Claim 1, **characterized in that** the control data are ascertained by predefinition of a relative position to be maintained between the eyeglass lens and the metering device, in particular repeatedly, preferably iteratively, by changing the relative position to be maintained, preferably until control data by means of which the predefined relative position is maintained exist for the entire coating process.

3. Method according to either of the preceding claims, **characterized in that,** during the movement of the eyeglass lens and/or the metering device, in particular by means of the ascertained control data, the relative position between the eyeglass lens surface to be coated and the metering device is kept within predefined limits.

4. Method according to one of the preceding claims, **characterized in that,** in the case of the use of metering needles, a direct or indirect description of the geometry of the needle tip that is relevant for the deposition process, and in particular also the position and location of the metering needle tip relative to the machine coordinate system, are used for the ascertainment.

5. Method according to one of the preceding Claims 1 to 3, **characterized in that,** in the case of the use of jet-type metering units, a direct or indirect description of the geometry of the jet-type metering unit that is relevant for the deposition process, the direction of flight of the droplets, and in particular also the position and location of the metering nozzles relative to the machine coordinate system, are used for the ascertainment.

6. Method according to one of the preceding claims, **characterized in that** the geometry of the face to be coated, in particular at any position on the face to be coated, is described by the specification of the surface normal.

7. Method according to one of the preceding claims, **characterized in that,** by means of the ascertained control data as relative position, the metering axis of the metering device is kept in an angular range of less than or equal to +- 45° about the surface normal of the surface to be coated, preferably less than or equal to +- 15° about the surface normal of the surface to be coated.

8. Method according to one of the preceding claims, **characterized in that,** by means of the control data, the distance (a) between the metering needle and the surface to be coated is kept in the range of 0.25 x di to 1.25 x di, preferably in the range of 0.4 x di to 0.6 x di, with di being the inside diameter of the metering needle.

9. Method according to one of the preceding claims, **characterized in that** the geometry of the metering needle is approximated by a circle geometry or sphere geometry with the radius r_{R}, the centre point of which lies at least approximately, preferably exactly on the metering axis, and the movements during the coating process are controlled such that the edge surface of the eyeglass lens edge always makes contact with this circle geometry or sphere geometry, in particular tangentially abuts the circle or the sphere, the radius r_{R} being selected such that it lies between the magnitudes r1 and r2, with r1 and r2 being calculated as follows:
r1 ≥ 3/4*di, preferably r1 ≥ 5/4*di
r2 ≤ 1.5*(2*d1^2+2*da*di+da^2)/(4*di), preferably
r2 ≤ (2*di^2+2*da*di+da^2)/(4*di)
with di being the inside diameter and da being the outside diameter of the metering needle.

10. Method according to one of the preceding claims, **characterized in that** the metering axis is fixedly positioned in an angular range of +- 45° relative to the axis of gravitational force, and the angle (δ) between the surface to be coated and the axis of the metering system lies in the range of 15° to 60°, preferably in the range of 30° to 45°.

## Revendications

1. Procédé de revêtement du bord de verres de lunettes au moyen d'un dispositif de dosage à aiguille ou à jet, le verre de lunettes et le dispositif de dosage étant déplacés l'un par rapport à l'autre et en l'occurrence un matériau de revêtement étant appliqué à partir du dispositif de dosage sur le bord du verre de lunettes, les données de commande pour la commande du déplacement du verre de lunettes et/ou du dispositif de dosage étant déterminées avant et/ou pendant le processus d'application sur la base de données géométriques du dispositif de dosage et de données géométriques, mesurées ou prélevées dans une mémoire de données, de la surface de bord à revêtir du verre de lunettes, **caractérisé en ce que** l'axe de dosage du dispositif de dosage est orienté fixement de manière constante dans une plage angulaire inférieure ou égale à +/- 45° autour de la direction de la gravité, de préférence dans une plage angulaire inférieure ou égale à +- 30° autour de la direction de la gravité, ou est maintenu à l'aide des données de commande.

2. Procédé selon la revendication 1, **caractérisé en ce que** les données de commande sont déterminées dans le but de maintenir une position relative entre le verre de lunettes et le dispositif de dosage, en particulier plusieurs fois, de préférence de manière itérative, en changeant la position relative à maintenir, de préférence jusqu'à ce que des données de commande pour tout le processus de revêtement soient présentes, à l'aide desquelles la position relative prédéfinie est maintenue.

3. Procédé selon l'une des revendications précédentes, **caractérisé en ce que** pendant le déplacement du verre de lunettes et/ou du dispositif de dosage, en particulier à l'aide des données de commande déterminées, la position relative entre la surface de verre de lunettes à revêtir et le dispositif de dosage est maintenue à l'intérieur de limites prédéfinies.

4. Procédé selon l'une des revendications précédentes, **caractérisé en ce que**, lors de l'utilisation d'aiguilles de dosage, une description directe ou indirecte de la géométrie de la pointe d'aiguille pertinente pour le processus d'application, en particulier également la position et l'orientation de la pointe d'aiguille de dosage par rapport au système de coordonnées de machine, sont utilisées pour la détermination.

5. Procédé selon l'une des revendications précédentes 1 à 3, **caractérisé en ce que**, lors de l'utilisation de doseurs à jet, une description directe ou indirecte de la géométrie du doseur à jet pertinente pour le processus d'application, de la direction de vol des gouttes, en particulier également la position et l'orientation des buses de dosage par rapport au système de coordonnées de machine, sont utilisées pour la détermination.

6. Procédé selon l'une des revendications précédentes, **caractérisé en ce que** la géométrie de la surface à revêtir, en particulier à chaque position à revêtir de la surface, est décrite par l'indication de la normale à la surface.

7. Procédé selon l'une des revendications précédentes, **caractérisé en ce qu'**à l'aide des données de commande déterminées en tant qu'orientation relative, l'axe de dosage du dispositif de dosage est maintenu dans une plage angulaire inférieure ou égale à +- 45° autour de la normale à la surface à revêtir, de préférence inférieure ou égale à +-15° autour de la normale à la surface à revêtir.

8. Procédé selon l'une des revendications précédentes, **caractérisé en ce qu'**à l'aide des données de commande, la distance (a) entre l'aiguille de dosage et la surface à revêtir est maintenue dans la plage de 0,25 x di à 1,25 x di, de préférence dans la plage de 0,4 x di à 0,6 x di, où di est le diamètre intérieur de l'aiguille de dosage.

9. Procédé selon l'une des revendications précédentes, **caractérisé en ce que** la géométrie de l'aiguille de dosage est approximativement une géométrie circulaire ou sphérique de rayon r_{R}, dont le centre se situe au moins approximativement, de préférence exactement sur l'axe de dosage, et les déplacements pendant le processus de revêtement sont commandés de telle sorte que la surface du bord de lunettes est toujours en contact avec cette géométrie circulaire ou sphérique, en particulier s'appuie tangentiellement contre le cercle ou la sphère, le rayon r_{R} étant sélectionné en l'occurrence de telle sorte qu'il se situe entre les grandeurs r₁ et r₂, r₁ et r₂ étant calculés comme suit :
r1≥3/4*di, de préférence r1 ≥ 5/4*di
r2≤1,5*(2*di^2+2*da*di+da^2)/(4*di), de préférence
r2≤(2*di^2+2*da*di+da^2)/(4*di)
où di est le diamètre intérieur et da est le diamètre extérieur de l'aiguille de dosage.

10. Procédé selon l'une des revendications précédentes, **caractérisé en ce que** l'axe de dosage est positionné de manière fixe dans une plage angulaire de +-45° par rapport au tracé d'axe de la gravité et l'angle (δ) entre la surface à revêtir et l'axe du système de dosage se situe dans la plage de 15 à 60°, de préférence dans la plage de 30 à 45°.
